# EUROPEAN PATENT SPECIFICATION

(11) **EP 3 666 927 B1**
(45) Date of publication and mention of the grant of the patent: **31.07.2024**
(21) Application number: 19167919.0
(22) Date of filing: 08.04.2019
(51) Int. Cl.: B23K 26/08, B23K 26/342, B22F 5/08, B33Y 30/00, B22F 7/08, B23K 26/00, B23K 26/06, B23K 26/14, C23C 24/10, B23K 26/34, B23K 101/00, B23K 103/02, B23K 103/04, B23K 103/08, B23K 103/18, B23K 26/144, B22F 3/105

(54) **GEAR PRODUCT HAVING REINFORCED DEPOSITION SURFACE AND DEPOSITION SYSTEM FOR MANUFACTURING THE SAME**
ZAHNRADPRODUKT MIT VERSTÄRKTER ABSCHEIDUNGSOBERFLÄCHE UND ABSCHEIDUNGSSYSTEM ZUR HERSTELLUNG DAVON
PRODUIT D'ENGRENAGE POSSÉDANT UNE SURFACE DE DÉPÔT RENFORCÉE ET SYSTÈME DE DÉPÔT POUR LA FABRIQUER

(30) Priority: 10.12.2018 KR 20180158499
(43) Date of publication of application: 17.06.2020
(73) Proprietor: SRC Corporation, Ansan-si, Gyeonggi-do 15433 (KR)
(72) Inventor: KIM, Kang Hyung, 15050 Siheung-si, GYEONGGI-DO (KR); HUH, Yun Ho, 15402 Ansan-si, GYEONGGI-DO (KR); YOON, Hyung Keun, 06226 Gangnam-gu, SEOUL (KR)
(74) Representative: Gamba, Alessandro

(56) References cited:
- CN-A- 107 893 228
- US-A- 6 146 476
- WAGNER F ET AL: "Reconditioning und Verlaengerung des Produktlebenszyklus von Schiffmaschinenbauteilen mittels Laser-Pulver-Auftragsschweissen", SCHWEISSEN IM SCHIFFBAU UND INGENIEURBAU : TAGUNGSBAND ZUR 11. SONDERTAGUNG, 28. UND 29. APRIL 2010 IN HAMBURG, HAMBURG : GERMANISCHER LLOYD [U.A.], DE, 28 April 2009 (2009-04-28), pages 112 - 123, XP008136552
- HERZOG DIRK ET AL: "Additive manufacturing of metals", ACTA MATERIALIA, ELSEVIER, OXFORD, GB, vol. 117, 20 July 2016 (2016-07-20), pages 371 - 392, XP029693441, ISSN: 1359-6454, DOI: 10.1016/J.ACTAMAT.2016.07.019
- WANG YANZHONG ET AL: "Laser cladding with grinding processing of orthogonal offset face gear", THE INTERNATIONAL JOURNAL OF ADVANCED MANUFACTURING TECHNOLOGY, SPRINGER, LONDON, vol. 100, no. 5, 8 October 2018 (2018-10-08), pages 1741 - 1753, XP036693314, ISSN: 0268-3768, [retrieved on 20181008], DOI: 10.1007/S00170-018-2729-8

## Description

### BACKGROUND OF THE INVENTION

### 1. Field of the invention

The present disclosure relates to a method for manufacturing a reinforced deposition layer on a gear product as defined in the appended claims.

### 2. Description of the Prior Art

As technological progress continues, modern society continues to promote safety and eco-friendliness in the direction of enhancing product life and durability in various industries. Among the various industrial fields, in automobiles, construction equipment, aircrafts, ships, transportation equipment, elevators, trains, and the like, particular emphasis is placed on operation safety and high durability of a large number of components operating at high speed and with repeated contact.

Typical operating components include a spline gear, a corrugating gear, a helical gear, a corrugated roller, a spline shaft, etc., where teeth of the crests and valleys mesh with each other and thus high surface pressure is applied thereto.

For example, in the case of a corrugated roller used for manufacturing corrugated cardboard which is widely used as a packaging material, a pair of rollers having flutes formed along the outer circumferential surface are provided to be engaged with each other so as to form corrugations on the raw cardboard paper to make the corrugated cardboard.

At this time, the teeth surface of the crests and the valleys, which form the rollers, are placed in an extreme wear environment due to the ash contained in the raw cardboard paper, so the teeth are required to have high strength and high wear resistance.

Accordingly, in corrugated rollers, an increase of abrasion resistance and extension of durability life are ensured through a surface hardening heat treatment for forming a surface hardening layer on the teeth or a process for forming a coating layer, such as plating.

More specifically, the increase of the abrasion resistance of the surface and the like may be obtained through the following steps: 1) selecting a base material or substrate, which has sufficient strength to withstand external stress, excellent ductility, and toughness, and which is easily available, 2) improving fatigue-resistant strength against bending stress and torsional stress and durability life of components, which are frequently contacted, by forming a hardened layer of several millimeters on the surface of a product in proportion to a stress level to be applied, and 3) forming a component layer, i.e. a coating layer in the level of several tens of micron having a degree of corrosion resistance and wear resistance superior to those of the base material or the hardened layer through a chemical/physical heat treatment on the surface.

Here, the conventional coating method of forming a high hardness compound of 0.1 mm or less on a surface through chemical infiltration such as nitriding treatment or carbonitriding treatment at 500 to 600°C has a problem in that the lower induction-hardened layer is softened to fail to exhibit sufficient durability against repeated bending fatigue stress or torsional fatigue stress, and a chemical or physical deposition method such as CVD or PVD is disadvantageous in that the thickness of a component layer is excessively thin, which is inadequate for satisfying requirements such as high resistance against surface pressure.

Coating methods such as plating and spray coating have been suggested to compensate for these disadvantages and have contributed to improvement of durability. Although a hard chrome plating method has advantages of excellent hardness in the range of HV800 to HV1050 and corrosion resistance, it is gradually being phased out of the market due to the harmfulness of the hexavalent chromium component; the electroless nickel plating method is excellent in corrosion resistance, but is poor in wear resistance due to due to relatively low hardness thereof; and a spray coating method using tungsten carbide or chromium carbide is capable of maximizing performance by obtaining high hardness of HV1250 or more and high corrosion resistance, but is disadvantageous in that since the bonding strength with the base material is low in the range of 35 MPa to 60 MPa, whereby a problem of peeling often occurs in a driving portion having a high contact surface pressure.

As a new coating method to solve such problems, an additive manufacturing technique of attaching a high-performance coating material supplied in the form of powder or wire on a base material to a desired site using a high energy source, such as a laser or an electron beam, that is 3D printing and Laser-Engineered Net Shaping (LENS), has been proposed.

However, since such a technique is effective for bulky objects mainly due to the use of a deposition method for plane parts, cylindrical parts or large pitched gears, here a limit to the application of a thin, uniform, and precise deposition of powdered materials to the surface of teeth composed of small crests and valleys in a thickness of a few hundreds of microns. Despite the demand to solve such a problem, specific improvement measures and sufficient research and development have not been conducted yet.

CN 107 893 228 A discloses a gear product comprising teeth in which valleys and crests are successively formed along an outer or inner circumference of a cylindrical body having a central rotation shaft; and a reinforced deposition layer over the teeth integrated with a surface of the teeth that has been made by 3D printing techniques.

Document US 6 146 476 A describes a 3D printing system to make a coated gear with teeth and valleys. The publication "Laser cladding with grinding processing of orthogonal offset face gear" (WANG YANZHONG ET AL" THE INTERNATIONAL JOURNAL OF ADVANCED MANUFACTURING TECHNOLOGY, SPRINGER, LONDON, vol. 100, no. 5, 8 October 2018) discloses a method for making a reinforced deposition layer on a gear having a cylindrical body and teeth with valleys and crests using a laser assisted deposition system with a coaxial nozzle.

### SUMMARY OF THE INVENTION

The present disclosure provides a method for manufacturing a gear product, in which powdered materials, which is high-performance coating material that is corrosion-resistant and abrasion-resistant, is uniformly and precisely deposited with high bonding strength on the surface of teeth composed of small crests and valleys by a laser beam and the thermal damage of a base material is minimized, thereby improving service life.

According to an aspect of the present invention, a gear product may include: teeth in which valleys and crests are successively formed along an outer or inner circumference of a cylindrical body having a central rotation shaft; and a reinforced deposition layer, which is formed by radiating a laser beam in a coaxial nozzle system to be directed to the teeth and injecting powdered materials to be in contact with a radiation axis of the laser beam around the radiated laser beam such that the powdered materials are melted and integrated with a surface of the teeth.

The deposition layer is formed in a state in which the teeth composed of the crests and the valleys are controlled to be positioned in a beam range including a Rayleigh range formed in a predetermined length to a focal point of the laser beam and a defocus area formed from the focal point in a length corresponding to the Rayleigh range The deposition layer is formed in a state in which the teeth composed of the crests and valleys are controlled to be positioned in the defocus area.

The deposition layer is formed through: a first deposition process performing first line deposition on the teeth, which are rotating, using a laser beam and the powdered materials, which are directed to be incident on inclined surfaces on one side of the teeth at a predetermined inclination angle; and a second deposition process performing second line deposition on the teeth, which are rotating, using the laser beam and the powdered materials, which are directed to be incident on inclined surfaces on a remaining side of the teeth at the predetermined inclination angle.

The predetermined inclination angle may be set to be equal to or greater than a first limit angle which is parallel to an axis connecting the rotation shaft and ends of crests and to be equal to or smaller than a second limit angle, which allows the first and second line depositions on the valleys not to be disturbed by adjacent crests.

Each of the first deposition process and the second deposition process linearly moves the laser beam and the powdered materials in the longitudinal direction of the cylindrical body by a length corresponding to 45% to 85% of a width length of a deposition bead formed by the first or second line deposition, and the first or second line deposition may be repeatedly performed.

The teeth may be formed such that a pitch, which is a distance between adjacent crests, is 1.0 mm to 20 mm, a valley depth is 0.3 mm to 10 mm, and a ratio of the pitch in relation to the valley depth (valley width ratio (the pitch/the valley depth)) is 1.9 to 4.0.

The powdered materials may be injected at a rate of 1.0 to 5.0 g/min per 100 W of laser power.

According to another aspect of the present that is outside the scope of the claims, a gear surface deposition system may include: a gear product including teeth in which valleys and crests are successively formed along an outer or inner circumference of a cylindrical body having a central rotation shaft; a rotating driving unit coupled to the rotation shaft so as to rotate the gear product forwards or rearwards; a coaxial nozzle module configured to radiate a laser beam toward the teeth, which is rotating and to inject powdered materials to be in contact with a radiation axis of the laser beam around the laser beam such that the powdered materials are melted and the melted powdered materials forms a deposition layer on a surface of the teeth; and a horizontal driving unit coupled to the coaxial nozzle module so as to linearly move the coaxial nozzle module in at least one of a longitudinal direction and a radial direction of the cylindrical body.

The coaxial nozzle module may be controlled such that the crests and valleys of the rotating teeth are positioned in a beam range including a Rayleigh range formed in a predetermined length to a focal point of the laser beam and a defocus distance formed from the focal point in a length corresponding to the Rayleigh range.

The coaxial nozzle module sequentially performs first and second line depositions on the surface of the teeth by causing the laser beam and the powdered materials to be incident at a predetermined inclination angle in a state in which the laser beam and the powdered materials are alternately directed to opposite inclined surfaces of the crests, thereby forming the deposition layer, and the horizontal driving unit may linearly move the coaxial nozzle module in the longitudinal direction of the cylindrical body after linearly moving the coaxial nozzle module in the radial direction of the cylindrical body such that the coaxial nozzle module is alternately directed to the opposite inclined surfaces of the crests.

The coaxial nozzle module may be composed of first and second nozzle modules, which are directed to respective ones of the opposite inclined surfaces of the crests at a predetermined inclination angle so as to simultaneously perform first and second line depositions on the surface of the teeth, thereby forming the deposition layer, and the horizontal driving unit may be composed of first and second driving units, which are coupled to respective ones of the first and second nozzle modules so as to linearly move the first and second nozzle modules in respective ones of the longitudinal direction and the radial direction of the cylindrical body.

The predetermined inclination angle may be set to be equal to or greater than a first limit angle which is parallel to an axis connecting the rotation shaft and ends of crests and to be equal to or smaller than a second limit angle which allows the first and second line depositions on the valleys not to be disturbed by adjacent crests.

The horizontal driving unit may linearly move the coaxial nozzle module in the longitudinal direction of the cylindrical body by a length corresponding to 45% to 85% of a width length of a deposition bead formed by the first or second line deposition, and the coaxial nozzle module may repeatedly perform the first or second line deposition at a linearly shifted position.

The coaxial nozzle module may include: a laser collimator configured to radiate a laser beam; a focusing lens provided to be positioned along a path of the laser beam so as to cause the laser beam to converge on an arbitrary focal point; and a powder supply unit configured to inject the powdered materials through a circular slit disposed along a circumference of the converging laser beam.

When the gear product is a corrugated roller having a valley width ratio of 1.80 or more and 2.00 or less, the predetermined inclination angle may be formed in a range of 43° to 70°.

When the gear product is a corrugated roller having a valley width ratio of 2.01 or more and 2.80 or less, the predetermined inclination angle may be formed in a range of 47° to 88°.

When the gear product is a corrugated roller having a valley width ratio of 2.81 or more and 4.50 or less, the predetermined inclination angle may be formed in a range of 55° to 110°.

According to the present disclosure, a reinforced corrosion-resistant and wear-resistant deposition layer formed on a gear product is formed through a coaxial nozzle system in which powdered materials, which are injected so as to be in contact with the radiation axis of a laser beam radiated towards teeth around the radiated laser beam, is melted by the laser beam so as to be deposited on the surface of the teeth. Thus, it is possible to freely and finely control the laser beam power, the rotational speed of the gear, and the type and the injection amount of powdered materials according to the shape and size of the crests and valleys (teeth), and the physical properties of the raw material constituting the gear product, so that a deposition layer, optimized to the teeth having various shapes and physical properties, can be uniformly and precisely formed.

Further, there is no fear of environmental pollution compared to conventional spray coating or hard chrome plating, softening of the induction hardened layer positioned under the teeth can be minimized by controlling the power of the laser beam or the focal distance, and the delamination of the deposition layer from the induction-hardened layer can also be minimized by the fact that the powdered materials are bonded by the laser beam to the surface of the teeth as weld-level bonding strength.

In addition, even when the teeth wear less than the limit outer diameter depending on the use thereof, when damages occur on some of the teeth is dented or cracked, or when some of the teeth are broken or fall out, it is possible to repair or reinforce the teeth by partially forming a deposition layer on the damaged portion without having to discard the gear product. Therefore, the cost lost due to failure or scrapping of the gear product itself can be greatly reduced.

### BRIEF DESCRIPTION OF THE DRAWINGS

The above and other aspects, features and advantages of the present disclosure will be more apparent from the following detailed description taken in conjunction with the accompanying drawings, in which:
FIG. 1 illustrates a perspective view and a cross-sectional view of a gear product having a reinforced deposition surface.
FIG. 2 illustrates a flowchart and a process diagram schematically showing steps of the manufacturing process of FIG. 1;
FIG. 3 illustrates a deposition system according to a first embodiment, which is used for forming the deposition layer shown in FIG. 1;
FIG. 4 illustrates a deposition system according to a second embodiment, which is used for forming the deposition layer shown in FIG. 1;
FIG. 5 illustrates an operational state diagram illustrating the linear movement of a coaxial nozzle module shown in FIGS. 3 and 4; and
FIGS. 6A to 6C illustrate a main process of forming a deposition layer using the deposition systems of FIGS. 3 and FIG. 4.

### DETAILED DESCRIPTION OF THE EXEMPLARY EMBODIMENTS

Hereinafter, exemplary embodiments of the present disclosure will be described in detail with reference to the accompanying drawings. In the description of the present disclosure, the description of well-known functions or structures will be omitted in order to make the subject matter of the present disclosure clear.

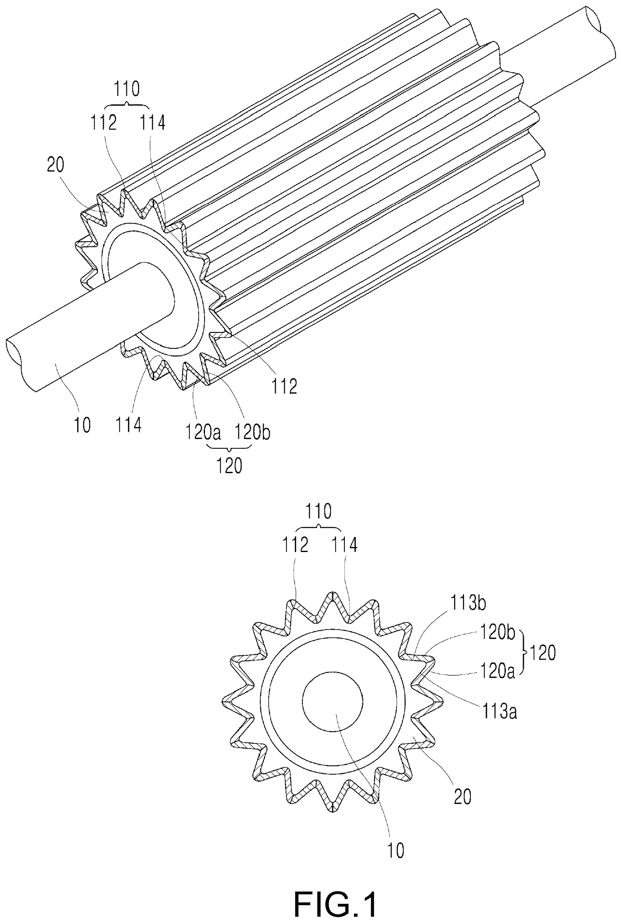

FIG. 1 illustrates a perspective view and a cross-sectional view of a gear product having a reinforced deposition surface.

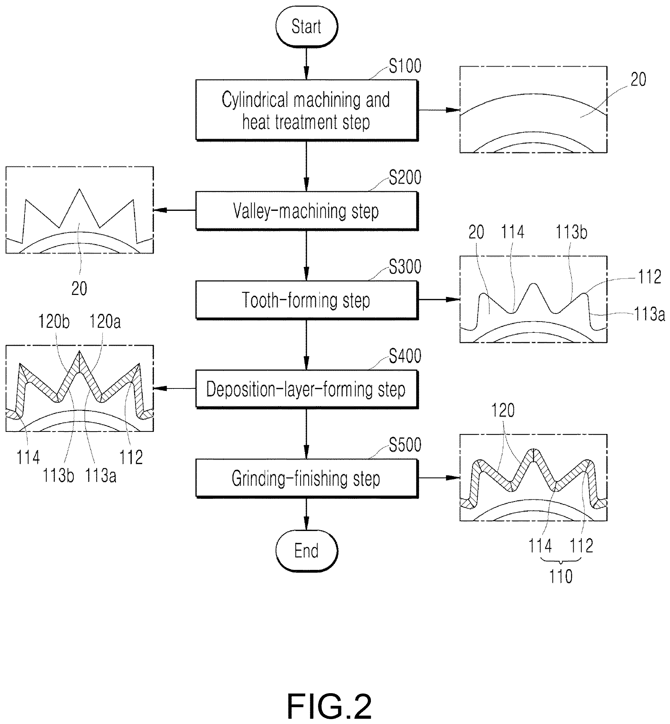

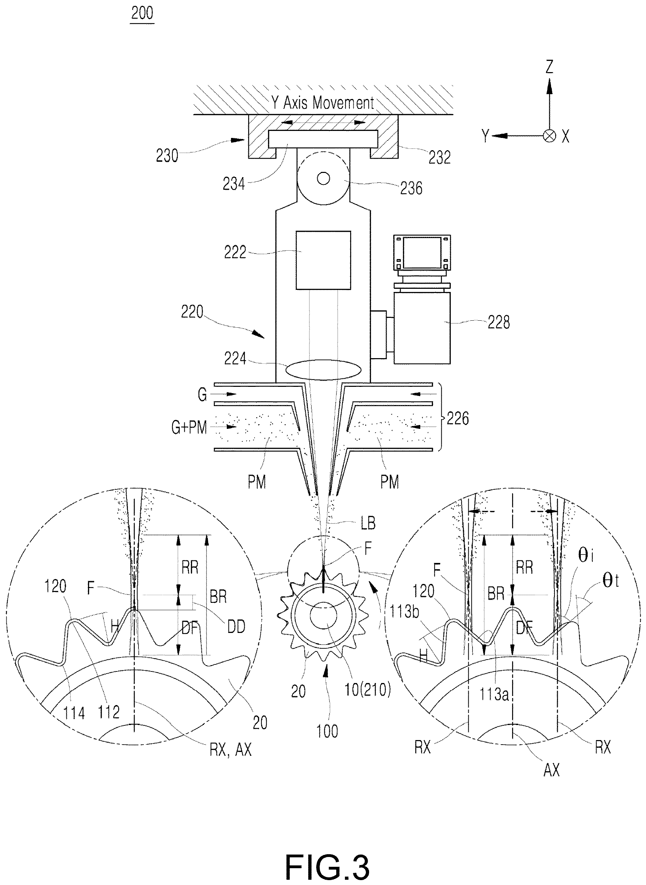

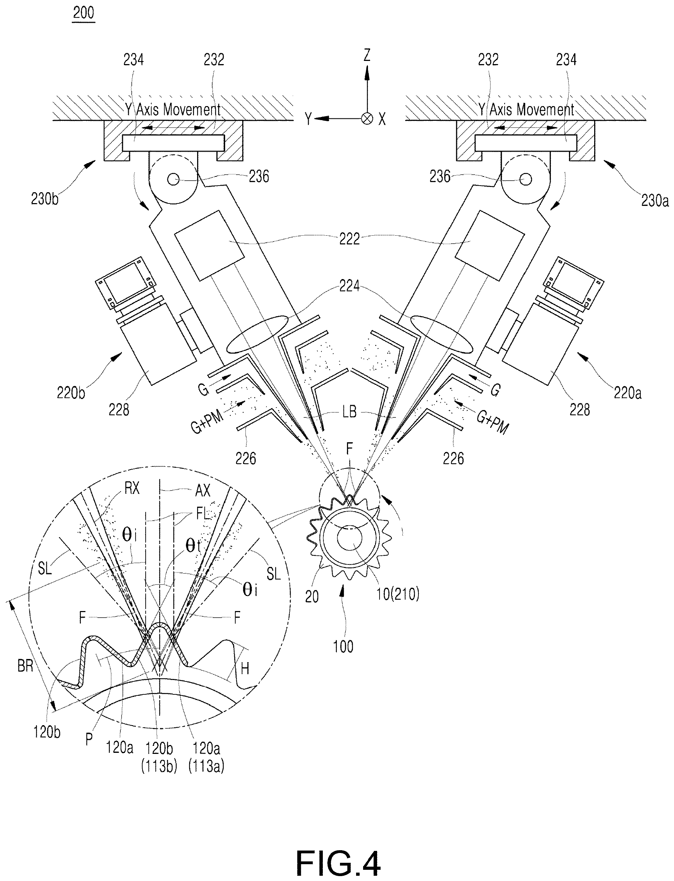

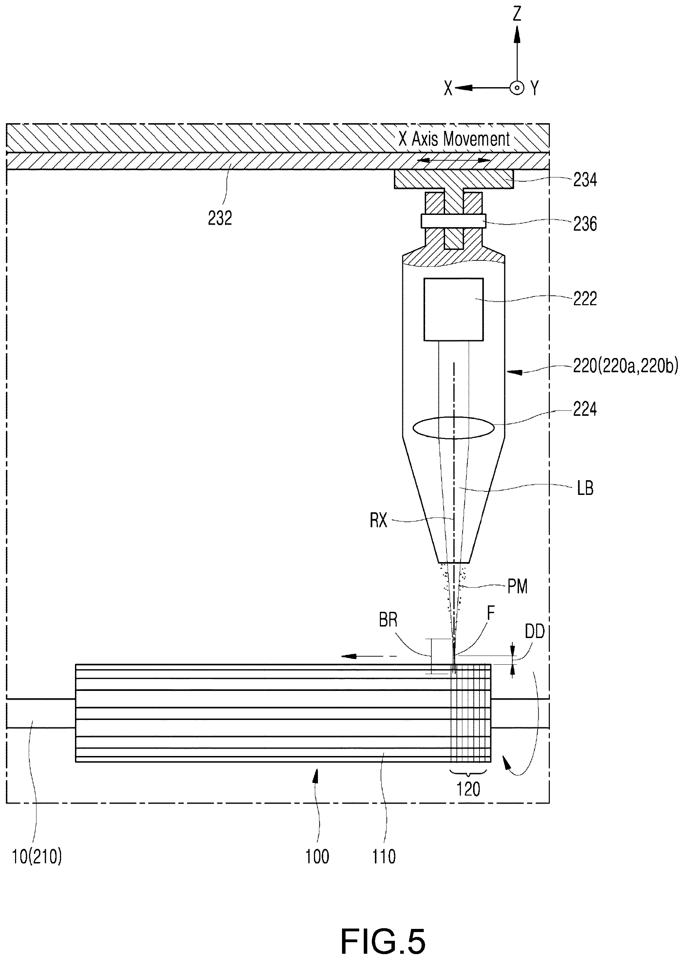

FIG. 2 illustrates a flowchart and a process diagram schematically showing steps of the manufacturing process of FIG. 1, FIG. 3 illustrates a deposition system according to a first embodiment, which is used for forming the deposition layer shown in FIG. 1, FIG. 4 illustrates a deposition system according to a second embodiment, which is used for forming the deposition layer shown in FIG. 1, FIG. 5 illustrates an operational state diagram illustrating the linear movement of a coaxial nozzle module shown in FIGS. 3 and 4, and FIGS. 6A and 6C illustrate a main process of forming a deposition layer using the deposition systems of FIGS. 3 and FIG. 4.

The X, Y, and Z axes shown in the drawings are arbitrarily set for convenience of explanation, not for the purpose of limitation of rights. The X axis defines a front- and-rear direction in which the arrow indicates the front side, the Y axis defines a left-and-right direction in which the arrow indicates the right side, and the Z axis defines the up-and-down direction in which the arrow indicates the upper side. Each direction described below is based on these definitions unless otherwise specifically limited.

A gear product 100, that is not part of the scope of the claims, having a reinforced deposition surface has been conceived in order to ensure that a deposition layer 120 optimized for teeth 110 of various shapes and properties is uniformly and precisely formed with weld-level bonding strength, the concern about environmental pollution is reduced compared with the prior art, and the softening of an induction-hardened layer positioned under the teeth 110 and the peeling of the deposition layer 120 are minimized.

The functions and actions of the present disclosure may be obtained by applying a coaxial nozzle system, which is capable of freely and finely adjusting the power and incident direction of a control parameter (a laser beam LB), the rotational speed of the gear product 100, the kind and injection amount of powdered materials PM, and a beam range BR related to a Rayleigh range RR, under optimized process conditions, depending on the physical properties of the raw material of the gear product 100, the shape and specification of crests 112 and the valleys 114 (the teeth 110).

Here, the coaxial nozzle system generally refers to a system in which two different materials are injected along a single axis towards generally the same target point. However, in the present disclosure, the coaxial nozzle system means an injection system in which the laser beam LB radiated along one radiation axis RX and an injected powdered material PM come into contact with each other at a predetermined point. The details of the coaxial nozzle system will be described in the following description of a deposition layer 120.

In the present disclosure, the term, gear product 100, refers to a mechanically working product having teeth or flute, each formed of a crest 112 and a valley 114, which are meshed with those of another gear product in the process of performing a rotating or linear motion and to which high surface pressure is applied, and may have a concept encompassing various power transmission gear devices such as a pinion gear and a rack gear, a corrugated roller, a spline shaft, and the like. However, in the present disclosure, the gear product 100 having a roller shape shown in FIG. 1 will be described as an example.

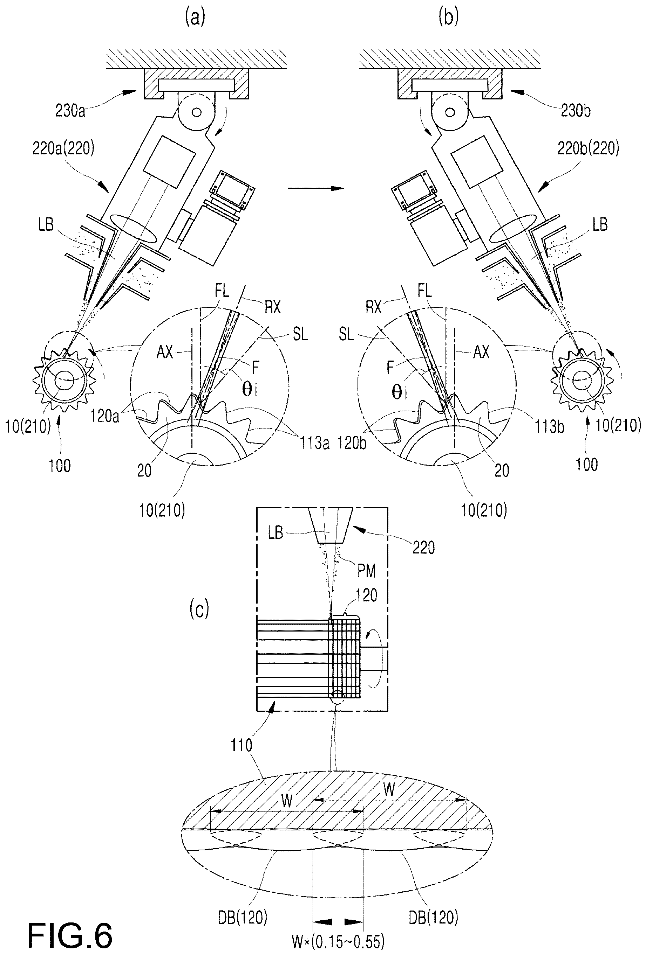

A gear product 100 having a reinforced deposition surface in accordance with the present description is configured to include the teeth 110, a deposition layer 120, and so on as shown in FIG. 1, and is completed according to the manufacturing method shown in FIG. 2 and FIGS. 6A and 6B.

The teeth 110 are formed by successively forming spiral or linear valleys 114 and crests 112 along the outer circumference of a cylindrical body 20 having a central rotation shaft 10 or a straight line or a spiral ridge along an inner circumference of the cylindrical body 20 or by successively forming spiral or linear valleys 114 and crests 112 along the inner circumference of the cylindrical body 20. The teeth 110 are formed by performing a valley-machining step and a tooth-forming step on the cylindrical body 20 having the rotation shaft 10 as will be described later.

Here, the rotary shaft 10 is coupled with a rotation driving unit 210 of a deposition system 200, to be described later, in the process of manufacturing the gear product 100 according to the present disclosure so as to form a center of rotation, and after the manufacture of the gear product 100 is completed, the rotary shaft 10 is attached to another mechanical apparatus so as to form a center of rotation. The rotation shaft 10 may be integrally formed with the cylindrical body 20 to be described later, or may be separately manufactured and may then be coupled to the cylindrical body 20.

The cylindrical body 20 is made of a cylindrical member, which may have a variety of diameters and lengths depending on the application, and constitutes the entire outer appearance of the gear product 100 according to the present disclosure. The cylindrical body 20 is made of alloy steel or the like that has strength, excellent ductility, and toughness capable of sufficiently bearing external stress applied thereto for use in mechanical operation or power transmission and that is easily available.

The cylindrical body 20 made of an alloy steel may be used as it is. However, as shown in FIG. 2, the cylindrical body 20 may be formed through a cylindrical machining process for accurate cutting so as to make the diameter of the cylinder to satisfy a required standard and a heat treatment process for improving the mechanical rigidity of the cylinder as a whole.

In one example, a cylindrical machining and heat treatment step is performed in the manner of heating a cylindrical AISI 4140 (KS SCM 440) alloy steel having a diameter of 100 mm to 830 to 880 °C, quenching the alloy steel in cooling oil of 80 °C, and tempering the alloy steel at 580 °C (S100) .

After pre-processing step S100 is performed on the cylindrical body 20 as described above, the valley-machining step and the tooth-forming step are performed successively, whereby the teeth 110, each composed of a crest 112 and a valley 114, can be formed.

The valley-machining step is a step of machining the basic shape of the teeth 110 before forming smoothly curved crests 112 and valleys 114. In the valley-machining step, a primary cutting operation is performed on the cylindrical body 20 using machining cutting devices such as a planner miller or a creep feed grinder.

Such a valley-machining step is performed in the manner of repeatedly cutting grooves of a predetermined depth at regular intervals along the outer circumferential surface of the cylindrical body 20, which have subjected to cylindrical machining and heat treatment. In this case, the cross-sectional shape of the grooves may be a triangle as shown in FIG. 2, or, trapezoid depending on the increase in the pitch P, which is the center distance between adjacent crests 112 (S200).

Next, the tooth-forming step is a machining step of finishing the shapes of the crests 112 and the valleys 114 such that the teeth 110, which are linearly moved or rotated in the state of being meshed with those of another gear product, softly and smoothly work. In the tooth-forming step, a secondary cutting is performed on the cylindrical body 20, which has been primarily cut using machining devices such as a planar miller and a creep feed grinder.

As illustrated in FIG. 2, in the tooth-forming step, grinding is performed so as to finish the teeth 110, having a primarily cut basic shape in which edges or grooves are not finished, into smoothly and gently curved crests 112 and valleys 114 in the form of an involute curve, for example.

By performing the valley-machining step and the tooth-forming step, finished teeth 110 having a smooth curve shape can be formed (S300).

Meanwhile, after the teeth 110 according to the present disclosure are completed through the valley-machining step and the tooth-forming step, or between these steps, in order to improve the fatigue strength for the crest 112 and the valley 114 and in order to improve the resistance to bending stress and torsional stress and service life of the crests 112 and valleys 114 where mechanical contact necessarily occurs, a heat treatment process, which additionally forms an induction-hardened layer having a thickness of several mm inwardly from the cut surface may be added in proportion to the stress level during service. In addition, the induction-hardening heat treatment described above may be performed before the valley-machining step is performed on the cylindrical alloy steel forming the cylindrical body 20, and then the teeth 110 may be machined using a creep feed grinder.

As an example, by performing the valley-machining steps and the tooth-forming step, which are primary and secondary cutting steps, on the cylindrical AISI 4140 (KS SCM 440) alloy steel having a diameter of 100 mm, which has been previously subjected to cylindrical machining and heat treatment, it is possible to manufacture an F-type corrugated roller, in which a pitch P, which is a center distance between adjacent crests 112, is about 2.4 mm, the valley depth (crest height) H, which is a difference between the crest 112 and the valley, is about 0.7 mm, and a valley width ratio (pitch P/valley depth H) is about 3.43.

When induction heat-treating is performed on the F-type corrugated roller in which the crests 112 and the valleys 114 of this standard are formed, an induction-hardened layer having surface hardness of Hs74 to Hs78 may be formed to a depth of 2 mm to 3 mm from the surface of the roller.

In addition to the corrugated roller standards described above as an example, the teeth 110 may have the pitch P in the range of 1.0 mm to 20 mm and the valley depth H in the range of 0.3 mm to 10 mm, in which the teeth 110 are formed in a tooth standard having the ratio of the pitch P to the valley depth H (pitch P/valley depth H) in the range of 1.9 to 4.0 (see Table 1 below).

The deposition layer 120 is a thin film-shaped component formed on the surface of the teeth 110 in order to enhance corrosion resistance, abrasion resistance, etc. of the teeth 110 finished through the above-described manufacturing process.

The deposition layer 120 is formed when a laser beam LB and powdered materials PM, which are respectively radiated and injected to the teeth 110 in a coaxial nozzle system as described above, overlap each other or come into contact with each other at a predetermined point, and particles of the powdered materials PM, which are melted thereby, are deposited on the surface of the teeth 110 (S400).

The coaxial nozzle system applied to the present disclosure may be specified as a deposition system in which powdered materials PM, which are injected so as to come into contact with the radiation axis RX of the laser beam LB around the laser beam LB radiated toward the gear tooth 110, comes into contact with the laser beam LB in an upper Rayleigh range RR including a focal point F so as to be melted, and then the melted powdered materials PM form a deposition layer 120 together with the surface of the teeth 110, i.e. the base material.

Such a coaxial nozzle system may be specifically implemented through a coaxial nozzle module 220 applied to deposition systems 200 according to the first and second embodiments as shown in FIGS. 3 and 4. Each of the systems is described below.

First, the deposition system 200 used in the present description is configured to continuously perform a deposition process on rotating teeth 110 using a single coaxial nozzle module 220 as shown in FIG. 3, and may include a rotation driving unit 210, a single coaxial nozzle module 220, a horizontal driving unit 230, and the like.

The rotation driving unit 210 is coupled to the rotation shaft 10 of the gear product 100 provided with the successive teeth 110 formed by the valleys 114 and the crests 112, and rotates the gear product 100 forwards and rearwards.

Due to the rotation driving unit 210, the crests 112 and the valleys 114 constituting the teeth 110 are relatively movable (rotatable) with respect to the laser beam LB and the powdered materials PM, which are respectively radiated and injected along a set radiation axis RX.

The coaxial nozzle module 220 used in the inventive method of the first embodiment is configured to radiate a laser beam LB along a radiation axis RX while directing the laser beam LB toward the rotating teeth 110, and to inject the powdered materials PM to come into contact with the radiation axis RX around the laser beam LB. The powdered materials PM melted thereby forms the deposition layer 120 on the surface of the teeth 110.

The coaxial nozzle module 220 linearly moves on the X axis or in the XY plane by a horizontal driving unit 230 to be described later and continuously performs ring-shaped line deposition on the surface of the teeth 110, thereby forming the deposition layer 120 on the entire surface of the teeth 110 (See FIGS. 3 and 5).

The line deposition is a technique in which deposition is performed in a linear form on the surface of the teeth as the teeth 110 are relatively moved by being rotated relative to the laser beam LB radiated from the coaxial nozzle module 220 fixedly installed to have the above-described radiation axis RX. Hereinafter, the line deposition can be understood in the same meaning in the following description.

The coaxial nozzle module 220 used in the method of the first embodiment may include a laser collimator 222, a focusing lens 224, a powder supply unit 226, a sensing unit 228, and the like as shown in FIG. 3. These devices are not comprised within the scope of the claims of the invention.

The laser collimator 222 may directly generate a high-power laser beam LB using CO₂, Nd/YAG, a semiconductor, or the like, or may receive an externally generated laser beam LB through an optical fiber bundle, a reflector, or the like and may radiate the laser beam LB to a focusing lens 224 to be described later.

The focusing lens 224 is provided so as to be adjustable in position along the path of the laser beam LB so as to converge the laser beam LB radiated from the laser collimator 222 onto a predetermined focal point F.

The term, focusing lens 224, may be understood as having a concept encompassing a functional lens such as a meniscus lens or an aspherical lens for minimizing spherical aberration as well as a lens that focuses the emitted laser beams LB onto the focal point F in a circular point shape, circular bundle shape, or a rectangular beam shape as required.

Particularly, in the present disclosure, the beam characteristics based on the circular laser beam LB are equally applicable to the rectangular beam-shaped laser beam LB having the same cross-sectional area.

The powder supply unit 226 injects the powdered materials PM through a circular slit disposed around the converged lager beam LB so as to come into contact with the radiation axis RX of the laser beam LB.

In the powder supply unit 226, a circular slit configured to control the injection amount and flow velocity through the pressure control of an inert gas G mixed with the powdered materials PM and a circular slit configured to inject only the inert gas G for shielding may be arranged in a stacked form along the radiation axis RX. Of course, the slits arrangement may be changed if necessary.

At this time, the inert gas G transports the powdered materials PM to the vicinity of the focal point F while serving to prevent oxidation in the process of melting the base material and the powdered materials PM through by bringing the powdered materials PM into contact with the laser beam LB or in the process of forming the deposition layer 120.

According to the present disclosure, at least one of nitrogen, argon, neon, and helium may be used as the inert gas G depending on deposition conditions, the physical properties of the raw material forming the teeth 110, and the shapes or standards of the crests 112 and the valleys 114.

Particularly, the argon gas causes a key hole phenomenon in which the central portion of a molten pool is deeply caved due to high injection rate when the power of the laser beam LB is high. Thus, for sound and good surface deposition, it is preferable to control the diameter of the laser beam LB, the feed or rotational speed of the gear product 100, the delivery pressure of the gas, or the like, or to use the argon in the state of being mixed with helium.

The powdered materials (PM) may be any of various types of powdered materials including at least one of aluminum, copper, cobalt, nickel, iron, chromium, manganese, titanium, tungsten, 0.5% C carbon steel, 440 stainless steel, 420 stainless steel, 316 stainless steel, Inconel 625 nickel alloy, Inconel 718 nickel alloy, tungsten carbide, Ti6Al4V titanium alloy, A356 aluminum alloy, aluminum bronze, and 6061 aluminum alloy.

In this case, the injection amount of the powdered materials PM may be determined on the basis of the specific gravity of the powdered materials. In the case of a material having a relatively high specific gravity, the injection amount (supply amount, g/min) is increased in order to form the deposition layer 120 in the same condition.

The sensing unit 228 may include a camera and a distance measurement sensor that can sense the state of the deposition layer 120, the distance and angle of the coaxial nozzle module 220 with respect to the surface of the gear tooth 110, and so on, which can be utilized as basic information for controlling the deposition system 200.

The coaxial nozzle module 220 having the above configuration makes the laser beam LB radiated along the emission axis RX through the laser collimator 222 converge to a predetermined focal point F through the focusing lens 224, thereby converting the laser beam into high energy.

At the same time, the coaxial nozzle module 220 injects the powdered materials PM through the circular slit of the powder supply unit 226 disposed around the laser beam LB together with the inert gas G in a controlled injection amount so as to come into contact with the radiation axis RX.

Thereby, since the powdered materials PM are melted by being in contact with the laser beam LB of high energy, a molten pool is formed on the surface of the teeth 110 and forming a deposition layer 120 having a predetermined thickness on the surface of the teeth 110.

Hereinafter, specific process conditions capable of forming an deposition layer 120 having optimized high quality by specifying the diameter, power, and incident direction of the laser beam LB, the rotational speed of the gear product 100, and the type and injection amount of the powdered materials PM, and the beam range BR associated with the Rayleigh range RR, which are major factors closely associated with the quality or characteristics of the deposition layer 120 coated on the teeth 110, will be described.

First, among the main factors, the power of the laser beam LB is a factor which can be appropriately determined depending on the thermal conductivity and specific heat among the physical properties of the powdered materials PM. When the powdered materials are a material having a high thermal conductivity, the powdered materials can be melted or sintered using a relatively small power, and when the powdered materials are a material having a large specific heat, a relatively large power is required for melting or sintering under the same conditions.

The power of this laser beam LB may be defined by the following equation: P = A.V.ρ. (Cₚ.Δt+ΔHₘ) where, since A is the cross-sectional area of the molten pool (m²), V is the deposition rate (m/s), ρ is the specific gravity of the powdered materials PM, Cₚ is the specific heat of the PM, Δt is the temperature difference between the molten powdered materials PM and the surface of the teeth 110, and ΔHₘ is the heat of fusion(latent heat of melting) of the melted powdered materials PM, it can be understood that the power of the laser beam LB is a function of the diameter of the laser beam LB, the supply amount of the powdered materials PM, and the deposition rate.

Therefore, generally, the physical properties of the deposition layer 120 can be controlled by adjusting two parameters of the powdered materials PM and the deposition rate in the state in which the physical properties of the laser beam LB are fixed.

The diameter of the laser beam LB at the focal point F may be determined to be 5 mm or less, but may be determined to be preferably 2 mm or less and more preferably 1.2 mm or less. When the diameter of the focal point F of the laser beam LB exceeds 5 mm, since the required energy of the laser becomes excessively large, the surface of the teeth 110 may be damaged or the precision of the deposition layer 120 may be easily degraded, and the manufacturing cost and the electric capacity of equipment itself may increase.

However, when the diameter of the focal point F of the laser beam LB is determined to be 1.2 mm or less, it is necessary to appropriately increase the rotational speed of the gear product 100 (about 30 to 60 m/min) in order to prevent a heat-affected zone, which is very brittle, from being formed due to a molten pool deeply formed in the teeth 110.

As shown in the enlarged view in the left portion of FIG. 3, the incident direction of the laser beam LB according to the present disclosure may be a direction in which an axis AX connecting an end portion of any one of the crests 112 of the teeth 110 rotating about the rotation shaft 10 and the rotation shaft 10 and the radiation axis RX of the laser beam LB coincide with each other. At this time, the position of the radiation axis RX of the laser beam LB radiated from the coaxial nozzle module 220 may be determined and controlled by the horizontal driving unit 230 that varies the position of the coaxial nozzle module 220.

In the case in which the axis AX and the radiation axis RX of the laser beam LB coincide with each other as described above, with reference to the focal point F, which is the maximum energy point of the laser beam LB, the laser beam LB radiated along the radiation axis RX reaches different distances on the rotating crests 112 and the valleys 114, thereby resulting in a deviation in laser energy.

On the inclined surfaces 113a and 113b disposed on the opposite sides of each of the crests 112, the laser beam LB reaches at a small incidence angle compared with the incident angles on the crests 112 and the valleys 114, and thus lower amounts of laser energy per unit area is transferred.

Consequently, it is difficult to uniformly form the deposition layer 120 with high quality over the entire teeth 110 due to the difference in laser energy per unit area depending on the distance from the focal point F or the incident angle of the laser beam LB.

In order to suppress or compensate for the unevenness of the deposition layer 120 due to the deviation of the laser energy as described above, in the first embodiment of the present invention, the deposition layer 120 is formed in the state in which the gear surface deposition system 200 is controlled such that the teeth 110 consisting of the crests 112 and the valleys 114 are positioned in the Rayleigh range RR formed in a predetermined length from the focal point F of the laser beam LB and in the beam range BR including the defocus area DF formed from the focal point F in a distance corresponding to the Rayleigh range RR.

This is a control method that is clearly distinguished from usual setting the focal point F of the laser beam LB to be positioned at the end of a crest 112 or around a valley 114, and is a control method for utilizing the energy characteristics of the Rayleigh range RR formed in a predetermined length and the beam range BR including the defocus area DF formed from the focal point F in a length corresponding to the Rayleigh range RR before reaching the focal point F of the laser beam LB, as shown in FIG. 3.

Here, the Rayleigh range RR refers to a region or range of a predetermined length prior to reaching the focal point F in which, even if the laser beam LB is collected at the focal point F through a focusing lens 224, the diameter of the laser beam LB does not approach 0 or the energy (temperature) of the laser beam LB does not converge infinitely at the focal point F theoretically, but a predetermined diameter of the laser beam LB is substantially maintained and a uniform energy density (temperature) distribution is exhibited.

These characteristics of the Rayleigh range RR extend to the above-described defocus area DF, which is a symmetrical region with respect to the focal point F, and consequently form a beam range BR in which a uniform level of energy density (temperature) is distributed.

That is, the beam range BR may be divided into the Rayleigh range RR in which the energy is uniform as the upper portion of the focal point F and the defocus area DF, which is symmetric to the Rayleigh range RR with respect to the focal point F, and in which a uniform energy level is maintained as the lower portion of the focal point F (see FIG. 3, etc.).

In order to explain the cause of occurrence of the Rayleigh range RR and the defocus area DF, a theory to find the cause on the self-defocusing phenomenon of light has been proposed. However, the specific causes, control factors, and the like have not been clarified yet.

According to the vapor deposition experiments using the deposition systems 200 according to the second embodiment as well as the first embodiment of the present disclosure, it has been found that, even in a laser beam LB exhibiting a Gaussian distribution, the length of the beam range BR, which can be handled as a uniform energy or temperature distribution range, can be variably determined or controlled.

That is, it has been found that the length of the beam range BR can be controlled in the range of a minimum of several mm to a maximum of several tens of mm (about 5 mm to 30 mm) through the selection of the power, wavelength, and diameter of the laser beam LB, and the various focusing lenses 224, and through the adjustment or change of the kind of the inert gas G which is a carrying medium of the powdered materials PM, and that the beam range BR of several tens of mm or more requires an excessive installation space and thus is inevitably limited in reality.

When the length of the beam range BR controlled to a specific range and position is utilized based on the above deposition experiment, an improved level of deposition layer 120 can be formed through the following steps.

First, a gear surface deposition system 200 is controlled such that the length of the beam range BR is set to be larger than at least the valley depth H (crest height) in correspondence with the teeth 110 composed of crests 112 and valleys 114 in various sizes.

The gear surface deposition system 200 is controlled such that the beam range BR is positioned at an arbitrary position on the radiation axis RX, which covers the height of the gear 110, which is changed according to the rotation by the rotation driving unit 210.

In the state set as described above, the gear surface deposition system 200 is controlled such that the laser beam LB is radiated along the axis AX, and through the powder supply unit 226, the powdered materials PM are injected towards the vicinity of the focal point F or towards the Rayleigh range RR.

Through the steps described above, the powdered materials PM melted uniformly in the Rayleigh range (RR), which is the upper portion of the beam range BR, may form a more sound and better deposition layer 120 of a high quality on the surface of the teeth 110 in the beam range BR in which density difference of the laser energy is reduced regardless of a spacing distance according to a height difference of the teeth 110.

Meanwhile, in order to obtain a high-quality deposition layer 120 that is more sound and better than the deposition layer 120 obtained by performing control such that the teeth 110 are positioned within the beam range BR set to a length larger than or equal to the valley depth H of the teeth 110 as described above, the control conditions can be further limited as follows.

That is, as shown in an enlarged view in the left part of FIG. 3, the defocus area DF forming the beam range BR may be set to be equal to or larger than the height H of the teeth 110, and the gear surface deposition system 200 may be controlled such that the teeth 110 are positioned within the defocus area DF.

Under the control conditions described above, the powdered materials PM injected to be in contact with the radiation axis RX in the Rayleigh range RR belonging to the upper portion of the beam range BR can be uniformly melted in advance in the Rayleigh range RR prior to forming the deposition layer 120 on the teeth 110 in the lower defocus area DF, thereby minimizing unmelted powder particles.

The powdered materials PM in the state in which the unmelted powder particles are minimized can reach the surface of rotating teeth 110 together with the laser beam LB in the defocus area DF, which is a section positioned after the focal point F, and in which the energy density deviation is reduced.

This makes it possible to form a more sound and uniform high-quality deposition layer 120 on the surface of the teeth 110 composed of the crests 112 and valleys 114. Furthermore, the thermal damage to the teeth 110 can be further reduced by reducing the depth of the molten pool and the thickness of the heat-affected zone (HAZ), and a more uniform deposition quality can be expected despite the unevenness of the teeth 110.

According to the deposition experiments performed using the deposition systems 200 according to the first and second inventive embodiments. It has been found that more favorable results of a sound and uniform adhesion of the deposition layer 120 in the entire interface with the teeth 110 and a reduction in the depth of the molten pool or thickness of heat affected zone (HAZ) can be obtained when the crest 112 adjacent to the focal point F of the laser beam LB is spaced apart from the focal point F by 0.1 mm to 10 mm (hereinafter, referred to as a defocus distance DD) in the state in which the teeth 110 are positioned in the defocus area DF.

That is, when the defocus distance DD from the focal point F to the adjacent crest 112 (included in the defocus area DF) was 0.1 mm to 10 mm, a remarkable deposition quality was obtained, and when the defocus distance DD was preferably 0.5 mm to 7 mm and more preferably from 1 mm to 4 mm, the deposition quality was further improved. Also, when the length of the cylindrical body 20 is long, it is possible to prevent, through the defocus distance DD, an accident that the teeth 110 collides with the end of the coaxial nozzle module 220 during rotation due to the bending deformation due to the thermal expansion of the cylindrical body 20.

However, when the defocus distance DD (included in the defocus area DF) is less than 0.1 mm, the crests 112 of the teeth 110 are positioned adjacent to the focal point F, which is the maximum energy convergence point. Thus, the energy uniformity effect due to the melting of the powdered materials PM are not sufficiently obtained, and thus the shape of the crests 112 are collapsed or a key hole phenomenon is sharply deepened the melting pool.

This phenomenon may be alleviated due to some degree, when some the powdered materials PM absorbs the energy of the laser beam LB by forming powder cloud near the focal point F. However, this phenomenon can be reduced more stable by ensuring the defocus distance DD.

On the other hand, when the defocus distance DD (included in the defocus area DF) exceeds 10 mm with reference to the crests 112 of the teeth 110, the distance to the focal point F of the laser beam LB increases in the concave valleys 114, and thus it is impossible to form an appropriate molten pool due to the weakened laser.

The powdered materials PM may include at least one of martensitic stainless steel powder, NiCr-based self-fluxing alloy powder, nickel alloy powder including Inconel powder, and hard ceramic powder such as tungsten carbide powder.

At this time, when the distribution, in which the particle size of the powdered materials PM are less than 5 *µ*m in diameter, is high, the fine particles are excessively scattered at the time of injection, which adversely affects the uniformity such as the power of the laser beam LB and the uniformity of the deposition layer 120. Thus, it is preferable that the distribution of the powder, the particle size of which is less than 5*µ*m, be limited to 5% or less, preferably 3% or less.

Also, in forming a uniform deposition layer 120 having a thickness of several tens of micrometers, the use of powder having an excessively large particle size is not preferable from the viewpoints of the roughness and soundness of the deposition surface and the ease of grinding process, which is post-machining. Thus, in the present embodiment, the diameter of the particles is controlled to be not more than 150 *µ*m, and in particular, when the deposition is carried out to a thickness of not more than 500 *µ*m, the roughness can be reduced by limiting the average particle diameter to 100 *µ*m or less, preferably 53 *µ*m or less.

The injection amount considered together with the kind of the powdered materials PM may be set to 1.0 to 5 g/min, preferably 2.0 to 4.0 g/min, more preferably 2.5 to 3.5 g/min per 100 W of the power of the laser beam LB in conjunction with the power of the laser beam LB.

The reason why the amount of the powdered materials PM are specifically limited in this way is because, when the powder is supplied at less than 1.0 g/min per 100 W of the power of the laser beam LB, more energy of the laser beam LB is further transferred to the valleys 114 and the crests 112 of the teeth 110. As a result, the shape of the crests 112 may be collapsed or the melting pool and the heat affected zone may be formed to be excessively deep.

When the powdered materials PM are supplied at higher than 5 g/min per 100 W of the power of the laser beam LB, quality problems may occur in that the temperature of the bonding interface between the surface of the teeth 110 and the deposition layer 120 may be too low to satisfy the desired bonding strength, or in that pores may be formed in the deposition layer 120, and thus the supply amount of the powdered materials PM are limited.

The rotational speed of the gear product 100 is a factor indicating the relative speed of the teeth 110 according to the laser beam LB radiated along the radiation axis RX with respect to the fixed target point. Unless the supply amount of the powder increases even when the rotational speed increases, thermal damage around the teeth 110 becomes inevitable.

However, when the rotational speed is increased, the powdered materials PM may not be sufficiently coated on the surface of the teeth 110 exposed heavier to the laser beam LB. Thus, it is advisable to slightly increase the supply amount of the powdered materials PM in proportion to the speed increase.

It has been described that the power of the laser beam LB mentioned above is a function of the cross-sectional area of the laser beam LB, the supply amount of the powdered materials PM, and the deposition rate. Through this, it is possible to deduce the correlation with the rotational speed.

Therefore, generally, the physical properties of the deposition layer 120 can be controlled by changing two parameters of the powdered materials PM and the deposition rate in the state in which the laser beam LB is fixed.

The rotational speed of the gear product 100 in the inventive method is limited to 1.5 to 300 m/min, preferably 2.0 to 200 m/min, more preferably 2.4 to 150 m/min with respect to the laser beam LB.

At this time, when the rotational speed of the gear product 100 exceeds 300 m/min, the relative speed of the laser beam LB is excessively fast, which incompletely makes the formation of the deposition layer 120 incomplete, and when the rotational speed is less than 1.5 m/min, deposition productivity is too low and the energy of the laser beam LB is excessively concentrated in the teeth 110, which causes surface damage. Thus, the rotational speed of the gear product 100 is limited.

As described above, in the coaxial nozzle module 220 according to the first embodiment inside the scope of the present invention, since the laser beam LB and the powdered materials PM, which are radiated and injected according to the control conditions as described above, are in contact with each other, ring-shaped line deposition is uniformly performed around the surface of the teeth 110 for each rotation of the teeth 110.

Meanwhile, the overall shape of the coaxial nozzle module 220 shown in FIG. 3 is an example corresponding to the teeth 110 formed on the outer circumference of a cylindrical body 20. Thus, the radiation end portion of the coaxial nozzle module 220 may be bent such that the deposition process can be performed in the vicinity of the teeth 110 when the teeth 110 are formed along the inner circumference of a cylindrical body 20.

The horizontal driving unit 230 that may be used in the inventive method according to the first embodiment is configured to linearly move, with respect to the rotating teeth 110, the coaxial nozzle module 220 on the X axis, i.e., in the longitudinal direction of the cylindrical body 20 and in the XY plane, i.e. in the longitudinal direction (the X axis direction) and radial direction (the Y axis direction) of the cylindrical body 20.

The horizontal driving unit 230 may be a known device that is coupled to the coaxial nozzle module 220, which is an object to be moved, so as to linearly move the coaxial nozzle module 220 in one or more directions. However, the first embodiment of the present disclosure may include a rail 232, a movable body 234, an angle-adjusting unit 236, and the like, specifically, as shown in FIGS. 3 and 5.

At least one rail 232, that is not part of the present invention, may be formed to be long depending on the number of linear movement directions of the coaxial nozzle module 220, and may be fixed to one side of the structure or may be installed to be movable with respect to another rail 232.

The movable body 234, that is not part of the present invention, is coupled on the rail 232 in the state of being coupled to the coaxial nozzle module 220 and performs a controlled linear movement along the at least one rail 232 by a predetermined power unit. At this time, the predetermined power unit may be a combination of a rack gear and a rotating pinion gear, or various linear motor assemblies.

The angle-adjusting unit 236, that is not part of the present invention, is configured to freely vary the inclination angle θi, which is formed by the laser beam LB, which is radiated along the radiation axis RX from the coaxial nozzle module 220, with respect to the surface of respective teeth 110 (the inclined surfaces 113a and 113b on the opposite sides).

The angle-adjusting unit 236 may be implemented using a power unit such as the step motor provided at one side of the movable body 234 so as to correctly and precisely control the rotation of the coaxial nozzle module 220, or may be implemented using hinge coupling provided on one side of the movable body 234 so as to enable the relative rotation of the coaxial nozzle module 220.

As illustrated in FIG. 5, the horizontal driving unit 230 configured as described above performs operation controls that linearly move the coaxial nozzle module 220 in the longitudinal direction of the cylindrical body 20 (the X axis direction) in the state in which the incident direction of the laser beam LB is maintained.

The ring-shaped line deposition formed in a line shape on the surface of the teeth 110 by the injection operation of the coaxial nozzle module 220 for each rotation of the teeth 110 is performed in an overlapping manner by linear movement of the horizontal drive unit 230 in the X-axis direction, so that the deposition layer 120 having a planar shape can be formed.

At this time, the linear movement distance of the coaxial nozzle module 220 by the horizontal driving unit 230 corresponds to a spacing distance between adjacent deposition beads 120 DB (corresponds to the cross section of line deposition 120a or 120b) as illustrated in FIG. 6C, and may be determined on the basis of the thickness of the designed final deposition layer 120 and the thickness of width of the deposition bead DB formed to correspond to the thickness of the designed final deposition layer DB.

That is, in order to form the deposition layer 120 having the designed thickness on the entire surface of the teeth 110, the power of the laser and the injection amount of the powdered materials PM are increased in proportion to the designed thickness, and thus a deposition bead DB having a convex shape corresponding to the designed thickness is formed through the control of the coaxial nozzle module 220.

Here, in order to ensure that the deposition bead DB, which is formed to be gradually convex in proportion to the thickness of the deposition layer 120, forms a uniform deposition layer 120 having the designed thickness, the overlapping range of adjacent deposition beads DB has to be increased due to the convex shape in proportion to the thickness of the deposition layer 120 (the linear movement distance of the coaxial nozzle module 220 in the X axis direction and the overlapping range are inversely proportional to each other).

Therefore, considering this correlation, the degree of convexity of the deposition bead DB itself formed during line deposition is large when a deposition layer 120 having a relatively large thickness of several millimeters per pass is formed. Thus, the overlapping range is set to be about 55% or less, preferably 35% or less. At this time, when the overlapping range exceeds 55%, the uniformity of the deposition layer 120 is improved, but the operation speed is too slow. Thus, the overlapping range is limited to the above-mentioned range.

When a deposition layer 120 having a relatively thin thickness of 0.5 mm/pass is formed, the degree of convexity of the deposition bead DB itself formed during the line deposition is small. Thus, the overlapping range of the deposition bead DB is set to be about 150 or more, preferably 25% or more. In this case, when the overlapping range is less than 15%, the surface layer of the deposition bead DB is sharply curved, and thus there is a problem in that the amount of grinding increases during the grinding finishing after deposition. Therefore, the overlapping range is limited to the above-mentioned range.

In summary, the linear movement distance of the coaxial nozzle module 220 in the X axis direction is determined in inverse proportion to the degree of convexity of the deposition bead DB, which is the thickness of the deposition layer 120. The linear movement distance is limited to a length corresponding to 45% (corresponding to the overlapping range of 55%) to 85% (corresponding to the overlapping range of 150) with respect to the width W of the deposition bead DB.

As described above, when the main factors for forming the deposition layer 120 are applied in a combination optimized for the deposition system 200 according to the first embodiment shown in FIG. 3 to correspond to various specifications, shapes, and materials of the teeth 110, the following effects can be expected.

That is, a high-quality deposition layer 120 having a sound bonding strength and uniformity is formed on the surface of the teeth 110 through the coaxial nozzle module 220 and the horizontal driving unit 230 without any positional change once the nozzle module and the horizontal driving unit are installed, whereby that the gear product 100 according to the present disclosure can be finally completed.

Meanwhile, the incident angle or the inclination angle θi of the laser beam LB with respect to the surface of the teeth 110 is variable through the control of the horizontal driving unit 230 that linearly moves the coaxial nozzle module 220 in the Y axis direction (the radial direction of the cylindrical body 20) such that any one of the opposite side inclined surfaces 113a and 113b of the crests 112 arranged in the Y axis direction is directed in the vertical direction, as illustrated in an enlarged view in the right portion of FIG. 3.

The linear movement of the coaxial nozzle module 220 in the Y axis direction is distinguished from that illustrated in the enlarged view in the left portion of FIG. 3 in which the axis AX and the radiation axis RX coincide with each other, and thanks to the linear movement of the coaxial nozzle movement 220, the deposition on the inclined surfaces 113a and 113b of the crests 112 can be further reinforced.

At this time, the linear movement distance is limited such that the inclination angle θi of the laser beam LB, which is formed with respect to the inclined surfaces 113a and 113b of different crests 112 and is increased in proportion to the linear movement distance in the Y axis direction with respect to the axis AX, is formed within a range smaller than the tooth angle θt, which is an angle formed by the opposite inclined surfaces 113a and 113b of the crests 112.

The reason for limiting the linear movement distance is that when the radiation axis RX is moved in the Y axis direction excessively such that the inclination angle θi of the laser beam LB is larger than the tooth angle θt, it is difficult to form the deposition layer 120 on the inclined surface 113b opposite the inclined surface 113a, that faces the laser beam LB, due to by being blocked out the crest 112 or by interfering with the crest 112. That is, at this time, in the state in which the radiation axis RX of the laser beam LB is set, ring-shaped line deposition cannot be performed by one rotation of the teeth 110.

The deposition system 200, that is not part of the present invention and may be used in the second embodiment of the present disclosure shown in FIG. 4 may include two coaxial nozzle modules 220 installed at symmetrical positions with respect to each of the rotating teeth 110 so as to form the halves of the deposition layer 120 simultaneously.

Alternatively, coaxial nozzle modules 220 may be alternately installed at symmetrical positions with respect to the teeth 110 rotating in a fixed state, thereby forming the halves of the deposition layer 120 sequentially.

The deposition system 200 used for carrying out the inventive method according to the second embodiment is distinguished in that the deposition process is divisionally performed on the opposite inclined surfaces 113a and 113b of the teeth 110, which are opposite each other, rather than performing successive ring-shaped line deposition on the teeth 110 by arranging the coaxial nozzle module 220 such that the axis AX and the radiation axis RX coincide with each other as in the first embodiment (see the enlarged view in the left part of FIG. 3).

That is, as illustrated in FIG. 4, the deposition system 200 to carry out the inventive method according to the second embodiment may include a rotation driving unit 210, one or more coaxial nozzle modules 220 configured to radiate a laser beam LB and to inject the powdered materials PM at a predetermined inclination angle θi to respective ones of the opposite inclined surfaces 113a and 113b forming the crest 112, a horizontal driving unit 230, and so on.

The rotation driving unit 210, the coaxial nozzle module 220, and the horizontal driving unit 230 of the second embodiment, and that are not part of the scope of the claims, fundamentally perform functions similar to or the same as the functions of those of the first embodiment. Thus, redundant descriptions will be omitted and only the different portions will be described in detail.

First, as illustrated in FIG. 4, there may be provided two coaxial nozzle modules 220 according to the second embodiment, which may be disposed such that with respect to one crest 112, the laser beams LB and the powdered materials PM are incident on each of the opposite inclined surfaces 113a and 113b at a predetermined inclination angle θi.

Here, the coaxial nozzle modules 220 include a first nozzle module 220a coupled to a first driving unit 230a, which is to one of the horizontal driving units 230, in the state of being directed to the inclined surface 113a of one side of a reference crest 112, and a second nozzle module 220b coupled to a second driving unit 230b, which is the remaining one of the horizontal driving units 230 in the state of directed to the inclined surface 113b of the other side of the reference crest 112.

The first line deposition 120a is performed through the first nozzle module 220a disposed as described above, and the second line deposition 120b is performed through the second nozzle module 220b, so that two portions of the deposition layer 120 can be formed on the surface of the teeth 110 simultaneously and rapidly.

Of course, the two coaxial nozzle modules 220 may be arranged with respect to the different crests 112 such that the laser beams LB are incident on respective ones of the inclined-surface 113a of one side and the inclined-surface 113b of the other side, so that the first line deposition 120a and the second line deposition 120b can be performed simultaneously.

Instead of the example illustrated in FIG. 4, in the system 200 including only one coaxial nozzle module 220, the first and second driving units 230a and 230b may be provided with the coaxial nozzle module 220 in turn, whereby the first line deposition 120a and the second line deposition 120b may be performed at different time points.

The second embodiment is similar to the first embodiment, except that there is provided a pair of (i.e., two) horizontal driving units 230 and the horizontal driving units 230 are coupled to the coaxial nozzle modules 220 such that laser beams LB form a predetermined inclination angle θi with respect to respective ones of the opposite inclined surfaces 113a and 113b at different positions, and the control operation is performed as described above.

The reason why the laser beams LB and the powdered materials PM are made to be incident on respective ones of the opposite inclined surfaces 113a and 113b of a gear tooth 110 while forming a predetermined inclination angle θi in the second embodiment unlike the first embodiment of FIG. 3 is to compensate or eliminate the unevenness in fine deposition, which may be caused when the laser beam LB is radiated according to the first embodiment of FIG. 3 in which the laser beam LB is radiated along the axis AX (radiation axis RX) in the state of being directed to the end portion of the crest 112.

That is, according to the first embodiment of FIG. 3, the reaching distances of the laser beam LB to the crest 112 and the valley 114 rotating with respect to the focal point F exhibit a difference by the valley depth H, and the difference in the reaching distances corresponds to a difference in energy (a fine difference exists even in the above-described beam range), resulting in fine deposition unevenness between the crests 112 and the valleys 114.

According to the first embodiment of FIG. 3, the laser beam LB reaches the opposite inclined surfaces 113a and 113b at a small incident angle compared to the end portions of the crest 112 and the valley 114, which causes a small amount of energy transfer per unit area of the laser beam LB with respect to the inclined surfaces 113a and 113b, thereby causing defective deposition on the inclined surfaces 113a and 113b.

However, when the laser beams LB are incident on respective ones of the opposite inclined surfaces 113a and 113b at predetermined inclination angle θi according to the second embodiment shown in FIG. 4, the difference in the reaching distances of the laser beams LB to the crest 112 and the valley 114 is reduced remarkably while the imbalance between the energy transfer amounts per unit area with respect to the inclined surfaces 113a and 113b is solved. Thus, a high-quality deposition layer 120 can be uniformly formed over the entire surface of the teeth 110.

Hereinafter, a process for forming the deposition layer 120 using the deposition system 200 according to the second embodiment will be described in detail with reference to FIGS. 4 to 6.

First, the deposition layer 120 according to the second embodiment may be formed through a first deposition process and a second deposition process performed per each rotation of the teeth 110 as shown in FIGS. 4 and 6 (S400).

At this time, as illustrated in FIG. 6A, the first deposition process is a process in which the first line deposition 120a is conducted on the rotating teeth 110 by the laser beam LB and the powdered materials PM, which are directed to be incident on the inclined surface 113a of one side of any one crest 112 at a predetermined inclination angle θi.

In addition, as illustrated in FIG. 6A, the second deposition process is a process in which the second line deposition 120b is conducted on the rotating teeth 110 by the laser beam LB and the powdered materials PM, which are directed to be incident on the inclined surface 113b of the other side of any one crest 112 at a predetermined inclination angle θi.

Of course, the first line deposition 120a and the second line deposition 120b of the first and second deposition processes may be performed simultaneously through the two coaxial nozzle modules 220 as described above. Alternatively, the first line deposition 120a and the second line deposition 120b may be performed at different time points through one coaxial nozzle module 220, which is installed to the first and second driving units 230a and 230b in turn.

The first and second line depositions 120a and 120b, which are discontinuously performed through the first and second deposition processes on the opposite inclined surfaces 113a and 113b, form one continuous ring-shaped line deposition layer 120 during one rotation of the teeth 110 (when the two coaxial nozzle modules 220 are provided).

As shown in FIGS. 5 and 6C, the ring-shaped line deposition layer 120, which is formed as a single unit, overlaps with a new line deposition layer 120, which is formed through the linear movement process of the first and second nozzle modules 220a and 220b in the X axis direction by the horizontal driving unit 230 and the first and second deposition processes performed thereafter again for one rotation of the teeth 110, thereby forming a plane-shaped deposition layer 120.

Since the linear movement of the first and second nozzle modules 220a and 220b by the horizontal driving unit 230 in the X axis direction and the new first and second deposition processes are continuously and repeatedly performed over all the teeth 110 in the longitudinal direction of the entire cylindrical body 20, a reinforced high-quality deposition layer 120 can be formed on the entire teeth 110.

The linear moving distances of the first and second nozzle modules 220a and 220b, which move in the X direction by the horizontal driving units 230 while maintaining the inclination angle θi of each of the laser beams LB, can be controlled as described above in the first embodiment.

Meanwhile, the predetermined inclination angle θi mentioned in the deposition system 200 according to the second embodiment may be an angle that may be set or decided in the range in which the inclination angle θi is equal to or larger than the first limit angle FL and is equal to or smaller than the second limit angle SL.

The first limit angle FL may be defined as an angle of the radiated laser beam LB with respect to any one of the opposite inclined surfaces 113a and 113b in the state in which the radiated laser beam LB is parallel to the axis AX connecting the rotation shaft 10 and the end portions of the crests 112, that is in the state in which each of the first and second nozzle modules 220a and 220b moves horizontally in the Y axis direction such that the axis AX and the radiation axis RX are parallel to each other and the opposite inclined surfaces 113a and 113b are set as a target point.

The second limit angle SL may be defined as an angle that allows the first and second line depositions 120a and 120b to be performed on a valley 114 of the teeth 110 without being disturbed or hindered by the crests 112 adjacent to the valley 114 in the state the opposite inclined surfaces 113a and 113b are set as target points.

By limiting the inclination angle θi to a predetermined range as described above, deposition performed on the entire teeth 110 composed of opposite inclined surfaces 113a and 113b and valleys 114 can be more favorably and uniformly performed on the opposite inclined surfaces 113a and 113b and the valleys 114 as well as the crests 112, compared to the case of the first embodiment (the incident angle when the axis AX and the radiation axis RF coincide with each other).

However, as illustrated in the enlarged view in FIG. 4, the more preferable second limit angle SL may be limited to an angle corresponding to a tooth angle θt (the angle formed by the opposite inclination angles 113a and 113b of the teeth 110) from any one of the opposite inclined surfaces 113a and 113b of the teeth 110 in the state in which the opposite inclined surfaces 113a and 113b are set as target points for the radiated laser beams LB.

Limiting the second limit angle SL in this way is to clearly provide the universally applicable limit criterion of the inclination angle θi while covering all of gear products 100 having gears of various shapes and sizes and a tooth angle θt.

As described above, specifically, the inclination angle θi limited to the range of the first and second limit angles FL and SL may be applicable to a gear product 100 having the teeth of the specification shown in Table 1, in which the pitch P, which is a distance between adjacent crests 112 is within the range of about 1.2 mm to 20 mm, the valley depth H is within the range of about 0.3 mm to 10 mm, and the ratio P of the pitch P relative to the valley depth H (valley width ratio: the pitch P/the valley H) is within the range of about 1.80 to 4.50.

Here, the reason why the pitch P, the valley depth H, and the valley width ratio are specifically limited as described above is because, when the pitch P is 20 mm or less and the valley depth H exceeds 10 mm, the arrival of the laser beam LB is interrupted by adjacent crests 112 and thus the temperature of the bonding interface at the lowermost portion of the valleys 114 and the inclined surfaces 113a and 113b may become too low.

In addition, the energy deviation of the laser beam LB with respect to the crests 112 and the valleys 114 due to the deep valley depth H becomes excessively large, and thus the molten pool may not be formed at a sufficient temperature, the bonding strength may not be satisfied, pores may occur in the deposition layer 120, thereby causing quality problems.

**Table 1**

| Tooth Type of Corrugated roller | Valley Width Ratio (Pitch/Valley Depth) | Example of Pitch (mm) | Example of Valley Depth (mm) | Predetermined Inclination Angle θi (°) |
|---|---|---|---|---|
| K | 1.88-2.00 | 19.0 | 10.0 | 43∼52 |
| A | 1.80-1.87 | 8.7 | 4.7 | 43∼68 |
| C | 2.01-2.40 | 7.9 | 3.7 | 47∼74 |
| B | 2.41-2.65 | 6.2 | 2.4 | 52∼81 |
| D | 2.66-2.80 | 5.0 | 1.8 | 53∼86 |
| E | 2.81-3.00 | 3.4 | 1.2 | 55∼90 |
| F | 3.01-3.50 | 2.4 | 0.7 | 60∼95 |
| G | 3.51-3.80 | 1.8 | 0.5 | 61∼105 |
| O | 3.81-4.50 | 1.2 | 0.3 | 62∼110 |

As exemplified in Table 1, it can be seen that according to respective types of teeth of corrugated rollers, which are classified on the basis of the valley width ratio, the predetermined inclination angle θi of the laser beam LB incident on the opposite inclined surfaces 113a and 113b of the crests 112 is determined within the range of 43° to 110° as a whole.

However, it is possible to form a deposition layer 120 exhibiting favorable effects or achieving the objects pursued by the second embodiment, when the inclination angle θi is decided as follows: the inclination angle θi is decided in the range of about 43° to 70° when the valley width ratio is 1.80 or more and 2.00 or less, the inclination angle θi is decided in the range of 47° to 88° when the valley width ratio is 2.01 or more and 2.80 or less, and the inclination angle θi is decided in the range of about 55° to 110° when the valley width ratio is 2.81 or more and 4.50 or less.

On the other hand, when the deposition is performed in the state of the inclination angle θi of the laser beam LB with respect to the corrugated roller is less than 43° or when the deposition is performed in the state of the inclination angle θi exceeding 110°, the thickness of the deposition layer 120 in the crests 112 and the valleys 114 may be too thin or it may be difficult to obtain a proper thickness of the deposition layer 120 in each region, thereby resulting in a reduction in the durability of the corrugated roller. Thus, the inclination angle is limited as described above.

As described above, when the deposition system 200 according to the second embodiment is used, it is easy to selectively repair or enhance any one of two inclined surfaces 113a and 113b, while it is possible to form deposition layers 120 having different physical properties on respective ones of the two inclined surfaces 113a and 113b. Thus, it is possible to produce a gear product 100 that meets various customer's demands, which rapidly change, in a timely manner.

Meanwhile, when the predetermined inclination angles θi of the laser beam LB incident on the opposite inclined surfaces 113a and 113b is limited as described above and the beam range BR associated with the Rayleigh range RR described in the first embodiment is applied to the teeth 110 according to the present disclosure, it is possible to obtain a reinforced high-quality deposition result having the best and sound bonding state and uniformity over the entire interface of the teeth 110.

After the formation of the sound and high-quality deposition layer 120 on the entire surface of the gear 110 by the methods according to the first and second embodiments as described above, the final gear product 100 is completed by performing a grinding finishing process using a grindstone wheel having an appropriate strength with respect to overlapping portions of line deposition layers 120 formed adjacent to each other (S500).

Next, manufacturing examples, which were tested while changing conditions for main factors in forming deposition layers 120 in order to ensure that best deposition layers 120 are formed on the basis of the foregoing description, will be briefly described.

### <Manufacturing Example 1>

An AISI 4140 (KS SCM 440) material was heat-treated in the manner of heating the material to a temperature of 830 to 880 °C, quenching the material at 80 °C in quenching oil, and tempering the material at 580 °C. In addition, while rotating an F-type corrugated roller manufactured using a cylindrical roller formed with an induction-hardened layer of a surface hardness Hs of 74 to 78 and a depth of 2 to 3 mm, and having a diameter of 100 mm, a pitch P of 2.4 mm, a valley depth H of 0.7 mm, and a valley width ratio in the range of 3.01 to 3.50, on a lathe (a rotation driving unit 210), a laser beam LB having a power of 3.5 kW and a diameter of 5 mm at the focal point F was applied with a defocus distance DD of 1.5 mm on the crests 112. Laser beams were radiated at the inclination angle θi of 70° with respect to the opposite inclined surfaces 113a and 113b while supplying martensitic stainless steel 420 powder sorted to the particle size in the range of 20 to 53 µm at a rate of 105 g/min. A sound deposition layer 120 having a thickness of about 2 mm was obtained on the entire surface of the teeth 110 by maintaining the overlapping range of adjacent deposition beads DB at 0.4 mm and maintaining the rotational speed of the gear product 100 at 1.4 m/min, and was finished by grinding the deposition layer 120 using an 80H standard alumina wheel.

### <Manufacturing Example 2>

While rotating an E-type corrugated roller manufactured under the heat treatment conditions, which are the same as Manufacturing Example 1, and having a diameter of 320 mm, a pitch P of 3.4 mm, a valley depth H of 1.2 mm, and a valley width ratio in the range of 2.81 to 3.00, on a lathe (a rotation driving unit 210), a laser beam LB having a power of 1.2 kW and a diameter of 5 mm at the focal point F was applied with a defocus distance DD of 1 mm on the crests 112. Laser beams were radiated at the inclination angle θi of 60° with respect to the opposite inclined surfaces 113a and 113b while supplying NiCr-based self-fluxing stainless steel 420 powder having the particle size in the range of 3 to 53 µm at a rate of 40 g/min. A sound deposition layer 120 having a thickness of about 0.035 mm was obtained on the entire surface of the teeth 110 by maintaining the overlapping range of adjacent deposition beads DB at 0.2 mm and maintaining the rotational speed of the gear product 100 at 30 m/min, and was finished by grinding the deposition layer 120 using an 80H standard alumina wheel.

### <Manufacturing Example 3>

While rotating a D-type corrugated roller manufactured under the heat treatment conditions, which are the same as Manufacturing Example 1, and having a diameter of 150 mm, a pitch P of 5 mm, a valley depth H of 1.8 mm, and a valley width ratio in the range of 2.66 to 2.80, on a lathe (a rotation driving unit 210), a laser beam LB having a power of 1.6 kW and a diameter of 2 mm at the focal point F was applied with a defocus distance DD of 3 mm on the crests 112. Laser beams were radiated at the inclination angle θi of 60° with respect to the opposite inclined surfaces 113a and 113b while supplying a mixture, obtained by mixing tungsten carbide powder having the particle size in the range of 20 to 53 µm in a ratio of 20 % by weight to Inconel 625 powder having the particle size in the range of 20 to 53 um, a rate of 40 g/min. A sound deposition layer 120 having a thickness of about 0.1 mm was obtained on the entire surface of the teeth 110 by maintaining the overlapping range of adjacent deposition beads DB at 0.25 mm and maintaining the rotational speed of the gear product 100 at 14m/min, and was finished by grinding the deposition layer 120 using a 60F standard cBN wheel.

### <Manufacturing Example 4>

While rotating a B-type corrugated roller manufactured under the heat treatment conditions, which are the same as Manufacturing Example 1, and having a diameter of 170 mm, a pitch P of 6.2 mm, a valley depth H of 2.4 mm, and a valley width ratio in the range of 2.41 to 2.65, on a lathe (a rotation driving unit 210), a laser beam LB having a power of 1.3 kW and a diameter of 1.2 mm at the focal point F was applied with a defocus distance DD of 0.5 mm on the crests 112. Laser beams were radiated at the inclination angle θi of 55° with respect to the opposite inclined surfaces 113a and 113b while supplying Inconel 625 powder having the particle size in the range of 20 to 53 µm at a rate of 46 g/min. A sound deposition layer 120 having a thickness of about 0.06 mm was obtained on the entire surface of the teeth 110 by maintaining the overlapping range of adjacent deposition beads DB at 0.25 mm and maintaining the rotational speed of the gear product 100 at 60m/min, and was finished by grinding the deposition layer 120 using an 60F standard alumina wheel.

### <Manufacturing Example 5>

While rotating a G-type corrugated roller manufactured under the conditions, which are the same as Manufacturing Example 1, and having a diameter of 320mm, a pitch P of 1.8mm, a valley depth H of 0.5 mm, and a valley width ratio in the range of 3.51 to 3.80, on a lathe (a rotation driving unit 210), a laser beam LB having a power of 1 kW and a diameter of 1.2 mm at the focal point F was applied with a defocus distance DD of 0.5 mm on the crests 112. Laser beams were radiated at the inclination angle θi of 105° with respect to the opposite inclined surfaces 113a and 113b while supplying NiCr-based self-fluxing alloy powder having the particle size in the range of 3 to 53 µm at a rate of 31 g/min. A sound deposition layer 120 having a thickness of about 0.025 mm was obtained on the entire surface of the teeth 110 by maintaining the overlapping range of adjacent deposition beads DB at 0.2 mm and maintaining the rotational speed of the gear product 100 at 150m/min, and was finished by grinding the deposition layer 120 using an 80H standard alumina wheel.

### <Manufacturing Example 6>

While rotating a C-type corrugated roller manufactured under the conditions, which are the same as Manufacturing Example 1, and having a diameter of 400mm, a pitch P of 7.9mm, a valley depth H of 3.7 mm, and a valley width ratio in the range of 2.01 to 2.40, on a lathe (a rotation driving unit 210), a laser beam LB having a power of 2.1 kW and a diameter of 1.2 mm at the focal point F was applied with a defocus distance DD of 1 mm on the crests 112. Laser beams were radiated at the inclination angle θi of 55° with respect to the opposite inclined surfaces 113a and 113b while supplying NiCr-based self-fluxing alloy powder having the particle size in the range of 3 to 53 µm at a rate of 72 g/min. A sound deposition layer 120 having a thickness of about 0.025 mm was obtained on the entire surface of the teeth 110 by maintaining the overlapping range of adjacent deposition beads DB at 0.2 mm and maintaining the rotational speed of the gear product 100 at 250m/min, and was finished by grinding the deposition layer 120 using an 60F standard alumina wheel.

### <Manufacturing Example 7>

While rotating an A-type corrugated roller manufactured under the conditions, which are the same as Manufacturing Example 1, and having a diameter of 500mm, a pitch P of 8.7mm, a valley depth H of 4.7 mm, and a valley width ratio in the range of 1.80 to 1.87, on a lathe (a rotation driving unit 210), a laser beam LB having a power of 1.2kW and a diameter of 0.8 mm at the focal point F was applied with a defocus distance DD of 0.2 mm on the crests 112. Laser beams were radiated at the inclination angle θi of 45° with respect to the opposite inclined surfaces 113a and 113b while supplying NiCr-based self-fluxing alloy powder having the particle size in the range of 3 to 53 µm at a rate of 48 g/min. A sound deposition layer 120 having a thickness of about 0.02 mm was obtained on the entire surface of the teeth 110 by maintaining the overlapping range of adjacent deposition beads DB at 0.2 mm and maintaining the rotational speed of the gear product 100 at 300m/min, and was finished by grinding the deposition layer 120 using an 60F standard alumina wheel.

### <Manufacturing Example 8>

In addition, while rotating an E-type corrugated roller manufactured under the conditions, which are the same as Manufacturing Example 1, and having a diameter of 170mm, a pitch P of 3.4mm, a valley depth H of 1.2 mm, and a valley width ratio in the range of 2.81 to 3.00, on a lathe (a rotation driving unit 210), a laser beam LB having a power of 2.3kW and a diameter of 0.8 mm at the focal point F was applied with a defocus distance DD of 7 mm on the crests 112. Laser beams were radiated at the inclination angle θi of 60° with respect to the opposite inclined surfaces 113a and 113b while supplying NiCr-based self-fluxing stainless steel 420 powder having the particle size in the range of 3 to 53µm at a rate of 30g/min. A deposition layer 120 having a thickness of about 0.03 mm was obtained on the entire surface of the teeth 110 by maintaining the overlapping range of adjacent deposition beads DB at 0.3 mm and maintaining the rotational speed of the gear product 100 at 155m/min, and was finished by grinding the deposition layer 120 using an 80H standard alumina wheel.

All the deposition layers 120, formed according to the above manufacturing examples, exhibited a uniform coating state. Particularly, the bonding strength and the soundness of the deposition layers 120 were excellent in the vicinity of the crests 112 of the teeth 110 that require high resistance against surface pressure.

Although the specific embodiment of the present disclosure has been described above, the invention is limited by the appended claims.

## Claims

1. A method for manufacturing a reinforced deposition layer (120) on a gear product (100), wherein said gear product (100) comprises:
- a cylindrical body (20) made of alloy steel;
- a rotation shaft (10) coupled in rotation with the cylindrical body (20);
- teeth (110) in which valleys (114) and crests (112) are successively formed along an outer or inner circumference of the cylindrical body (20), wherein the teeth (110) has a valley depth or crest height (H), which is a difference between the crest and the valley in the radial direction;
wherein the method comprises the step of:
- radiating a laser beam (LB) in a coaxial nozzle system to be directed to the teeth (110), and
- injecting powdered materials (PM) to be in contact with a radiation axis (RX) of the laser beam (LB) around the radiated laser beam (LB) such that the powdered materials (PM) come in contact with the laser beam (LB) so as to be melted, and then the melted powdered materials (PM) form a deposition layer (120) integrated with the teeth (110);
- controlling the position of the crests (112) and valleys (114) to be positioned in a beam range (BR) including a Rayleigh range (RR) formed in a predetermined length to a focal point (F) of the laser beam (LB) and a defocus area (DF) formed from the focal point (F) in a length corresponding to the Rayleigh range (RR);
wherein the defocus area (DF) is equal to or larger than the valley depth or crest height (H) of the teeth (110);
wherein the crests (112) and valleys (114) are controlled to be positioned in the defocus area (DF), and the distance between the focal point (F) and a crest (112) adjacent to the focal point (F) is 0.1 mm to 10 mm;
- directing the laser beam (LB) and the powdered materials (PM) to be incident on inclined surfaces (113a, 113b) of the crests (112) at a predetermined inclination angle and performing:
• a first deposition process performing first line deposition (120a) on one inclined surface (113a) of the teeth (110), which are rotating;
• a second deposition process performing second line deposition (120b) on the inclined surface (113b) on the remaining side of the crests (112) of the teeth (110), which are rotating;
wherein the rotation speed is limited 1.5 to 300 m/min;
wherein each of the first deposition process and the second deposition process linearly moves the laser beam (LB) and the powdered materials (PM) in the longitudinal direction (X) of the cylindrical body (20) by a length corresponding to 45% to 85% of a width length of a deposition bead (DB) formed by the first (120a) or second (120b) line deposition, and the first (120a) or second (120b) line deposition is repeatedly performed.

2. The method of claim 1, wherein the predetermined inclination angle is set to be equal to or greater than a first limit angle (FL) which is parallel to an axis (AX) connecting the rotation shaft (10) and ends of crests (112) and to be equal to or smaller than a second limit angle (SL) which allows the first and second line depositions (120a, 120b) on the valleys (114) not to be disturbed by adjacent crests (112).

3. The method of any of the preceding claims, wherein a pitch (P), which is a distance between adjacent crests (112), is 1.0 mm to 20 mm, a valley depth (H) is 0.3 mm to 10 mm, and a ratio of the pitch (P) in relation to the valley depth (H), valley width ratio that is the pitch / valley depth, is 1.9 to 4.0.

4. The method of any of the preceding claims, wherein the powdered materials (PM) are injected at a rate of 1.0 to 5.0 g/min per 100 W of laser power.

## Patentansprüche

1. Verfahren zur Herstellung einer verstärkten Abscheideschicht (120) auf einem Zahnradprodukt (100), wobei das Zahnradprodukt (100) aufweist:
- einen zylindrischen Körper (20), der aus einem Legierungsstahl hergestellt ist;
- eine Drehwelle (10), die mit dem zylindrischen Körper (20) rotationsgekoppelt ist;
- Zähne (110), in denen Täler (114) und Scheitel (112) nacheinander entlang eines Außen- oder Innenumfangs des zylindrischen Körper (20) gebildet sind, wobei die Zähne (110) eine Taltiefe oder Scheitelhöhe (H) haben, die eine Differenz zwischen dem Scheitel und dem Tal in der Radialrichtung ist;
wobei das Verfahren umfasst:
- Abstrahlen eines Laserstrahls (LB) in einem Koaxialdüsensystem, um auf die Zähne (110) gerichtet zu sein, und
- Einspritzen von pulverförmigen Materialen (PM), um in Kontakt mit einer Strahlungsachs (RX) des Laserstrahls (LB) um den abgestrahlten Laserstrahl (LB) zu sein, so dass die pulverförmigen Materialien (PM) in Kontakt mit dem Laserstrahl (LB) kommen, um geschmolzen zu werden, und die geschmolzenen pulverförmigen Materialien (PM) dann eine Abscheideschicht (120) bilden, die in die Zähne (110) integriert ist;
- Steuern der Position der Scheitel (112) und der Täler (114) dahingehend, dass sie in einem Strahlbereich (BR) positioniert sind, umfassend eine Rayleigh-Länge (RR), die einer vorgegebenen Länge zu einem Brennpunkt (F) des Laserstrahls (LB) gebildet ist, und einen Defokussierungsbereich (DF), der von dem Brennpunkt (F) in einer der Rayleigh-Länge entsprechenden Länge gebildet ist;
wobei der Defokussierungsbereich (DF) größer gleich der Taltiefe oder Scheitelhöhe (H) der Zähne (110) ist;
wobei die Scheitel (112) und Täler (114) dahingehend gesteuert werden, in dem Defokussierungsbereich (DF) positioniert zu sein, und der Abstand zwischen dem Brennpunkt (F) und einem Scheitel (112) benachbart des Brennpunkts (F) 0,1 bis 10 mm beträgt;
- Lenken des Laserstrahls (LB) und der pulverförmigen Materialien (PM) so, dass sie auf geneigten Oberflächen (113a, 113b) der Scheitel (122) unter einem vorgegebenen Neigungswinkel auftreffen, und Durchführen:
• eines ersten Abscheideprozesses, bei dem die Abscheidung der ersten Linie (120a) durchgeführt wird, auf einer geneigten Oberfläche (113a) der Zähne (110), die sich drehen;
• eines zweiten Abscheideprozesses, bei dem die Abscheidung der zweiten Linie (120b) durchgeführt wird, auf der restlichen Seite der Scheitel (112) der Zähne (110), die sich drehen;
wobei die Drehzahl auf 1,5 bis 300 m/min begrenzt ist;
wobei der erste Abscheideprozess und der zweite Abscheideprozess den Laserstrahl (LB) und die pulverförmigen Materialien (PM) jeweils linear in Längsrichtung (X) des zylindrischen Körpers (20) bewegen, um eine Länge, die 45% bis 85% einer Länge einer Abscheideraupe (DB) beträgt, die durch die erste (120a) oder zweite (120b) Linienabscheidung gebildet wurde, und die erste (120a) oder zweite (120b) Linienabscheidung wiederholt durchgeführt wird.

2. Verfahren nach Anspruch 1, wobei der vorgegebene Neigungswinkel so eingestellt wird, dass er größer gleich einem ersten Grenzwinkel (FL) ist, der parallel zu einer Achse (AX) ist, welche die Drehwelle (10) und die Enden der Scheitel (112) verbindet, und dass er kleiner gleich einem zweiten Grenzwinkel (SL) ist, der es ermöglicht, dass die ersten und zweiten Linienabscheidungen (120a, 120b) auf den Tälern (114) nicht durch benachbarte Scheitel (112) gestört werden.

3. Verfahren nach einem der vorstehenden Ansprüche, wobei eine Teilung (P), die ein Abstand zwischen benachbarten Scheiteln (112) ist, 1,0 mm bis 20 mm beträgt, eine Taltiefe (H) 0,3 mm bis 10 mm beträgt und ein Verhältnis der Teilung (P) in Bezug auf die Taltiefe (H), Talbreitenverhältnis, d.h. Teilung/Taltiefe, 1,9 bis 4,0 beträgt.

4. Verfahren nach einem der vorstehenden Ansprüche, wobei die pulverförmigen Materialien (PM) mit einer Geschwindigkeit von 1,0 bis 5,0 g/min pro 100 W Laserleistung injiziert werden.

## Revendications

1. Procédé de fabrication d'une couche de dépôt renforcée (120) sur un produit d'engrenage (100), dans lequel ledit produit d'engrenage (100) comprend :
- un corps cylindrique (20) réalisé en acier allié ;
- un arbre de rotation (10) couplé en rotation avec le corps cylindrique (20) ;
- des dents (110), dans lesquelles des creux (114) et des sommets (112) sont successivement formés le long d'une circonférence extérieure ou intérieure du corps cylindrique (20), dans lequel les dents (110) présentent une profondeur de creux ou une hauteur de sommet (H) qui est une différence entre le sommet et le creux dans la direction radiale ;
dans lequel le procédé comprend l'étape suivante :
- le rayonnement d'un faisceau laser (LB) dans un système de buse coaxial de sorte à le diriger vers les dents (110) et
- l'injection de matériaux en poudre (PM) de sorte à les mettre en contact avec un axe de rayonnement (RX) du faisceau laser (LB) autour du faisceau laser rayonné (LB) de sorte que les matériaux en poudre (PM) viennent en contact avec le faisceau laser (LB) de sorte à être fondus, et les matériaux en poudre fondus (PM) forment ensuite une couche de dépôt (120) intégrée aux dents (10) ;
- le contrôle de la position des sommets (112) et creux (114) de sorte à être positionnée dans une gamme de faisceau (BR) incluant une gamme de Rayleigh (RR) formée dans une longueur prédéterminée à un point focal (F) du faisceau laser (LB) et une zone de flou (DF) formée à partir du point focal (F) dans une longueur correspondant à la gamme de Rayleigh (RR) ;
dans lequel la zone de flou (DF) est égale à ou plus grande que la profondeur de creux ou hauteur de sommet (H) des dents (110) ;
dans lequel les sommets (112) et creux (114) sont contrôlés de sorte à être positionnés dans la zone de flou (DF) et la distance entre le point focal (F) et un sommet (112) adjacent au point focal (F) est comprise entre 0,1 mm et 10 mm ;
- la direction du faisceau laser (LB) et des matériaux en poudre (PM) de sorte qu'ils soient incidents sur des surfaces inclinées (113a, 113b) des sommets (112) selon un angle d'inclinaison prédéterminé et la réalisation :
- d'un premier processus de dépôt réalisant un premier dépôt de ligne (120a) sur une surface inclinée (113a) des dents (110) qui tournent ;
- d'un second processus de dépôt réalisant un second dépôt de ligne (120b) sur la surface inclinée (113b) sur le côté restant des sommets (112) des dents (110) qui tournent ;
dans lequel la vitesse de rotation est limitée à 1,5 à 300 m/min ;
dans lequel chacun du premier processus de dépôt et du second processus de dépôt déplace linéairement le faisceau laser (LB) et les matériaux en poudre (PM) dans la direction longitudinale (X) du corps cylindrique (20) d'une longueur correspondant à 45 % à 85 % d'une longueur de largeur d'un cordon de dépôt (DB) formé par le premier (120a) ou second (120b) dépôt de ligne et le premier (120a) ou second (120b) dépôt de ligne est réalisé de manière répétée.

2. Procédé selon la revendication 1, dans lequel l'angle d'inclinaison prédéterminé est défini comme étant égal ou supérieur à un premier angle limite (FL) qui est parallèle à un axe (AX) reliant l'arbre de rotation (10) et des extrémités de sommets (112) et comme étant égal ou inférieur à un second angle limite (SL) qui permet aux premier et second dépôts de ligne (120a, 120b) sur les creux (114) de ne pas être gênés par des sommets (112) adjacents.

3. Procédé selon l'une quelconque des revendications précédentes, dans lequel un écartement (P) qui est une distance entre des sommets (112) adjacents est compris entre 1,0 mm et 20 mm, une profondeur de creux (H) est comprise entre 0,3 mm et 10 mm, et un rapport de l'écartement (P) en relation avec la profondeur de creux (H), rapport de largeur de creux qui est l'écartement/la profondeur de creux, est compris entre 1,9 et 4,0.

4. Procédé selon l'une quelconque des revendications précédentes, dans lequel les matériaux en poudre (PM) sont injectés à une vitesse de 1,0 à 5,0 g/min par 100 W de puissance laser.
